# EUROPÄISCHE PATENTANMELDUNG

(11) **EP 3 168 194 A1**
(43) Veröffentlichungstag der Anmeldung: **17.05.2017**
(21) Anmeldenummer: 16198284.8
(22) Anmeldetag: 10.11.2016
(51) Int. Cl.: C02F 1/30, C02F 11/12, F26B 3/347

(54) **VERFAHREN ZUM TROCKNEN VON FEUCHTEN SUBSTANZMENGEN DURCH MIKROWELLEN**

(30) Priorität: 10.11.2015 DE 102015119358
(71) Anmelder: Grammelsberger, Axel, 64846 Gross-Zimmern (DE)
(72) Erfinder: Grammelsberger, Axel, 64846 Gross-Zimmern (DE)
(74) Vertreter: Katscher Habermann Patentanwälte

(57) **Zusammenfassung**

Bei einem Verfahren zum Trocken von feuchten Substanzmengen (6) durch Mikrowellen, wobei die zu trocknende Substanzmenge (6) durch einen Behandlungsraum (3) gefördert wird, in welchem ein in die Substanzmenge (6) eindringendes Mikrowellenfeld mit einer vorgebbaren Mikrowellenstrahlungsleistung erzeugt wird, wird während einer Messdauer eine Kenngröße für einen nicht zur Trocknung der Substanzmenge umgewandelten Anteil der Mikrowellenstrahlungsenergie ermittelt und während einer nachfolgenden Behandlungsperiode in Abhängigkeit von der ermittelten Kenngröße die Mikrowellenstrahlungsenergie des in die Substanzmenge (6) eindringenden Mikrowellenfeldes vorgegeben. Der nicht zur Trocknung der Substanzmenge (6) umgewandelte Anteil der Mikrowellenstrahlungsenergie wird einem Messraum (11) zugeführt und mit einer Messeinrichtung (12) wird die Kenngröße in dem Messraum (11) erfasst. Die Messeinrichtung (12) weist ein mikrowellenabsorbierendes Messprobenmaterial auf, dessen Erwärmung erfasst wird, die durch das dem Messraum (11) zugeführten Mikrowellenfeld bewirkt wird. Eine Fördergeschwindigkeit der zu trocknenden Substanzmenge (6) durch den Behandlungsraum (3) oder eine mit mindestens einer Vorrichtung zur Erzeugung von Mikrowellenstrahlung (9) erzeugte Mikrowellenstrahlungsleistung wird so vorgegeben, dass während einer Behandlungsdauer eine vorgegebene Mikrowellenstrahlungsenergie in die Substanzmenge (6) eindringt.

## Beschreibung

Die Erfindung betrifft ein Verfahren zum Trocknen von feuchten Substanzmengen durch Mikrowellen, wobei die zu trocknende Substanzmenge durch einen Behandlungsraum gefördert wird, in welchem ein in die Substanzmenge eindringendes Mikrowellenfeld mit einer vorgebbaren Mikrowellenstrahlungsleistung erzeugt wird.

In verschiedenen Anwendungsbereichen ist es zweckmäßig oder sogar notwendig, größere Mengen einer feuchten Substanzmenge möglichst rasch und effizient zu trocknen. So können beispielsweise bei der Herstellung von Nahrungsmitteln oder Baumaterialien einzelne Verfahrensschritte notwendig sein, welche die Zugabe von Wasser oder Feuchtigkeit erfordern, bevor anschließend entweder für eine nachfolgende Weiterverarbeitung oder für eine Lagerung und den Transport der Nahrungsmittel oder Baumaterialien wieder Feuchtigkeit entzogen wird. Auf diese Weise kann beispielsweise das Gewicht der getrockneten Substanzmenge reduziert und deren Haltbarkeit verlängert werden.

Auch bei der Entsorgung von Klärschlämmen müssen große Mengen von zunächst feuchtem Klärschlamm getrocknet und anschließend entweder deponiert oder verbrannt werden. Dabei befinden sich Deponien oder Verbrennungsanlagen für Klärschlämme üblicherweise nicht unmittelbar auf dem jeweiligen Gelände der Kläranlage, auf welchem der Klärschlamm entsteht. Um den Transport des Klärschlamms von der Kläranlage zu einer Deponie oder einer Verbrennungsanlage wirtschaftlich sinnvoll zu ermöglichen ist es üblicherweise erforderlich, den zunächst feuchten Klärschlamm zu trocknen.

Die Trocknung von Klärschlämmen soll dabei sowohl energieeffizient als auch innerhalb einer möglichst kurzen Trocknungsdauer erfolgen können. Aus der Praxis ist es deshalb bekannt, dass Klärschlämme ebenso wie andere feuchte Substanzmengen mit Hilfe von Mikrowellenstrahlen behandelt und getrocknet werden können. Durch die in den Klärschlamm eindringenden Mikrowellen kann gezielt ein in dem Klärschlamm enthaltener Wasseranteil erhitzt und verdampft werden.

Beispielsweise in DE 34 18 101 A1 wird ein Verfahren zur Behandlung von wasserhaltigen Substanzen beschrieben, bei dem die zu trocknende Substanzmenge auf einem Förderband durch ein Mikrowellenfeld hindurchgeleitet und dabei getrocknet wird. Bei Klärschlämmen handelt es sich jedoch nicht um ein homogenes Material mit einer vorab bekannten Zusammensetzung, so dass ein Trocknungsgrad der feuchten Substanzmenge, der mit der vorgegebenen Mikrowellenbehandlung erreicht wird, unterschiedlich sein kann. In vielen Fällen ist es deshalb erforderlich, mit unnötig viel Energie derartige Trocknungsanlagen zu betreiben, um einen vorgegebenen Trocknungsgrad sicherstellen zu können.

Aus DE 102 17 432 B4 ist ein Verfahren bekannt, bei dem die Behandlung von Klärschlämmen mit Mikrowellen oder Hochfrequenzstrahlung kombiniert wird mit einer thermischen Trocknung des Klärschlamms, um dadurch möglichst energieeffizient und mit kurzer Trocknungsdauer den Klärschlamm trocknen zu können. Die thermische Trocknung des Klärschlamms soll zudem ermöglichen, dass die Verdampfungswärme des in dem Klärschlamm enthaltenen Wassers genutzt werden kann. Die Kombination der Mikrowellenbehandlung und der thermischen Behandlung des Klärschlamms erfordert jedoch konstruktiv aufwändige und in der Steuerung anspruchsvolle Anlagen.

Es wird als eine Aufgabe der vorliegenden Erfindung angesehen, die Trocknung von feuchten Substanzmengen und insbesondere von Klärschlämmen mit Mikrowellenstrahlung so weiterzuentwickeln, dass während der Behandlung der feuchten Substanzmenge mit der Mikrowellenstrahlung die Mikrowellenstrahlungsenergie an die zu trocknende Substanzmenge, beziehungsweise an den zu trocknenden Klärschlamm angepasst werden kann.

Diese Aufgabe wird erfindungsgemäß dadurch gelöst, dass während einer Messdauer eine Kenngröße für einen nicht zur Trocknung der Substanzmenge umgewandelten Anteil der Mikrowellenstrahlungsenergie ermittelt und während einer nachfolgenden Behandlungsperiode in Abhängigkeit von der ermittelten Kenngröße die Mikrowellenstrahlungsenergie des in die Substanzmenge eindringenden Mikrowellenfeldes vorgegeben wird. Es hat sich gezeigt, dass der Anteil der Mikrowellenstrahlungsenergie, der nicht für die Trocknung der Substanzmenge verwendet, beziehungsweise umgewandelt wird und als Mikrowellenstrahlung wieder aus der zu trocknenden Substanzmenge austritt, ein geeigneter Indikator für eine energieeffiziente Steuerung einer Einrichtung zu Erzeugung von Mikrowellenstrahlung ist. Die von der Einrichtung zur Erzeugung von Mikrowellenstrahlung abgestrahlte Mikrowellenstrahlungsenergie kann dabei so gering wie möglich vorgegeben werden, um einerseits in einer möglichst kurzen Trocknungsdauer einen vorgegebenen Trocknungsgrad der feuchten Substanzmenge erreichen zu können und andererseits lediglich einen möglichst geringen Anteil an Mikrowellenstrahlung zu erzeugen, der die feuchte Substanzmenge durchdringt und nicht zur Erwärmung und Verdampfung des Feuchtegehalts in der Substanzmenge verwendet wird. Die Messdauer, die zur Ermittlung einer Kenngröße für diesen nicht zur Trocknung der Substanzmenge umgewandelten Anteil der Mikrowellenstrahlungsenergie benötigt wird, kann vergleichsweise kurz vorgegeben werden und beispielsweise wenige Minuten oder Sekunden betragen. Eine nachfolgende Behandlungsperiode kann zeitlich der Messdauer entsprechen, so dass kontinuierlich die Kenngröße ermittelt und die daran angepasste Steuerung der Mikrowellenstrahlungsenergie erfolgen kann. Die gesamte Behandlungsdauer beträgt üblicherweise ein Mehrfaches oder Vielfaches einer Messdauer bzw. Behandlungsperiode, beispielsweise etwa eine Stunde bei einer Messdauer von einer Minute. Damit ist eine näherungsweise bzw. für alle praktischen Belange kontinuierliche Prozesssteuerung und gegebenenfalls auch Regelung des Trocknungsverfahrens möglich, um energieeffizient einen vorgegebenen Trocknungsgrad zu erreichen.

Gemäß einer besonders vorteilhaften Ausgestaltung des Erfindungsgedankens ist vorgesehen, dass der nicht zur Trocknung der Substanzmenge umgewandelte Anteil der Mikrowellenstrahlungsenergie mindestens teilweise einem Messraum zugeführt wird und mit einer Messeinrichtung die Kenngröße in dem Messraum erfasst wird. Mit dem Messraum können für den Betrieb der Messeinrichtung geeignete Rahmenbedingungen vorgegeben werden. Zudem kann durch eine geeignete Abgrenzung des Messraums von einem Behandlungsraum für die feuchte Substanzmenge erreicht werden, dass eine gegebenenfalls empfindliche oder von den Umgebungsbedingungen leicht beeinflussbare Messeinrichtung geschützt und gegebenenfalls weitgehend abgekapselt betrieben werden kann und zuverlässig präzise Messergebnisse liefern kann. Geeignete Messeinrichtungen für die Erfassung der Stärke eines Mikrowellenfeldes oder der Energie eines Mikrowellenfeldes sind aus der Praxis bekannt. Der üblicherweise in den Messraum eindringende bzw. überführte Anteil der Mikrowellenstrahlungsenergie, die nicht zur Trocknung der Substanzmenge umgewandelt wird, kann durch Referenzmessungen vorab ermittelt werden, falls an Stelle einer relativen Kenngröße eine absolute Kenngröße oder Mikrowellenstrahlungsleistungsbestimmung zweckdienlich erscheint.

Einer vorteilhaften Ausgestaltung des Erfindungsgedankens zufolge ist vorgesehen, dass die Mikrowellenstrahlungsleistung über einen Trocknungshohlleiter mit mindestens einer Austrittsöffnung dem Behandlungsraum zugeführt wird, wobei über eine Abzweigung von dem Trocknungshohlleiter in einen Messhohlleiter ein nicht zur Trocknung der Substanzmenge ungewandelter Anteil der Mikrowellenstrahlungsenergie dem Messraum zugeführt wird. Der Messraum kann beabstandet von dem Behandlungsraum angeordnet und gegebenenfalls gesondert abgeschirmt sein, um eine unerwünschte Beeinflussung der dem Messraum zugeführten Mikrowellenstrahlungsleistung zu vermeiden. Die Zuführung eines nicht zur Trocknung der Substanzmenge umgewandelten Anteils der Mikrowellenstrahlungsenergie erfolgt ausschließlich über den Messhohlleiter, so dass über die konstruktive Gestaltung der Hohlleiteranordnungen ein kontrollierbarer und damit genauer und reproduzierbarer Anteil der nicht zur Trocknung der Substanzmenge umgewandelter Anteil der Mikrowellenstrahlungsenergie dem Messraum zugeführt wird. Die mit einer derartig ausgestalteten Vorrichtung erreichbaren Messergebnisse sind entsprechend genauer und reproduzierbarer, so dass die für den Trocknungsvorgang benötigte und erzeugte Mikrowellenstrahlungsleistung besser auf die zu trocknende Substanzmenge abgestimmt werden kann.

Erfindungsgemäß kann die Abzweigung von dem Trocknungshohlleiter in den Messhohlleiter einen Richtkoppler aufweisen, so dass das von einer Mikrowellenerzeugungsvorrichtung erzeugte Mikrowellenstrahlungsfeld zunächst an dem Messhohlleiter vorbeiwandert und lediglich ein nicht zur Trocknung der Substanzmenge ungewandelter Anteil der Mikrowellenstrahlungsenergie aus dem Trocknungshhohlleiter zurück und über den Messhohlleiter dem Messraum zugeführt wird. Durch die Verwendung eines Richtkopplers, der auch als Hohlleiter-Weiche bezeichnet werden kann, kann der Anteil der Mikrowellenstrahlung, der nicht unmittelbar von der Mikrowellenerzeugungsvorrichtung in den Messhohlleiter einkoppelt und dem Messraum zugeführt wird, ohne für den Trocknungsvorgang zur Verfügung zu stehen, deutlich verringert werden. In der über dem Messhohlleiter dem Messraum zugeführten Mikowellenstrahlung wird der Anteil der aus dem Trocknungshohlleiter zurückgeführten Mikrowellenstrahlung im Gegenzug deutlich erhöht, so dass sich jede Veränderung des Anteils der aus dem Trocknungshohlleiter zurückgeführten Mikrowellenstrahlung wesentlich stärker auf die insgesamt dem Messraum zugeführte Mikrowellenstrahlung auswirkt. Die Messgenauigkeit kann dadurch zusätzlich verbessert werden.

Es ist ebenfalls möglich und im Hinblick auf eine möglichst kostengünstige und gleichzeitig zuverlässige Ausgestaltung des Messverfahrens vorteilhaft, dass die Messeinrichtung ein mikrowellenabsorbierendes Messprobenmaterial aufweist, dessen Erwärmung erfasst wird, die durch das dem Messraum zugeführten Mikrowellenfeld bewirkt wird. Als mikrowellenabsorbierendes Messprobenmaterial kann beispielsweise eine vorgegebene Probenmenge von Wasser verwendet werden, wobei eine Temperatur der Wasserprobenmenge gemessen und erfasst wird. Je größer der Anteil der Mikrowellenstrahlungsenergie ist, die nicht zur Trocknung der Substanzmenge umgewandelt wird, sondern für die Erwärmung der Wasserprobenmenge zur Verfügung steht, umso rascher, beziehungsweise stärker wird die Wassermenge aufgeheizt. Die Erwärmung der Wassermenge kann deshalb als Kenngröße zur Steuerung der von der Einrichtung zur Erzeugung von Mikrowellenstrahlung abgegebenen Mikrowellenstrahlungsleistung verwendet werden. Anstelle von Wasser kann auch jedes andere geeignete Fluid oder Medium verwendet werden, dass durch die für die Trocknung der Substanzmenge verwendete Mikrowellenstrahlung beeinflusst und erwärmt werden kann.

Um eine Einbindung der Messeinrichtung in ein automatisiertes Steuerungsverfahren für die Mikrowellenstrahlungsleistung, das mit einer Steuerungseinrichtung durchgeführt wird, zu erleichtern ist der erfindungsgemäß vorgesehen, dass die Messeinrichtung eine Sensoreinrichtung aufweist. Die Sensoreinrichtung kann beispielsweise ein Mikrowellensensor oder aber ein Temperatursensor sein. Die mit der Sensoreinrichtung erzeugten elektrischen Messsignale können entweder unbearbeitet an die Steuerungseinrichtung übermittelt werden oder aber durch die Sensoreinrichtung bereits umgewandelt oder in andere Kenngrößen umgerechnet werden, die anschließend an die Steuerungseinrichtung übermittelt werden. Die Übermittlung der Sensorsignale kann drahtgebunden oder aber drahtlos erfolgen.

Um das Trocknungsverfahren in Kenntnis der erfassten Kenngrößen möglichst energieeffizient durchzuführen ist erfindungsgemäß vorgesehen, dass eine Fördergeschwindigkeit der zu trocknenden Substanzmenge durch den Behandlungsraum so vorgegeben wird, dass während einer Behandlungsdauer eine vorgegeben Mikrowellenstrahlungsenergie in die Substanzmenge eindringt. Es ist ebenfalls möglich, die in einer Zeiteinheit auf ein Förderband aufgebrachte Menge der zu trocknenden Substanzmenge zu verändern und so vorzugeben, dass während des Betriebs bei einer gleichbleibenden Fördergeschwindigkeit und bei einer gleichbleibenden Strahlungsleistung der Mikrowellenstrahlung eine vergleichbare Trocknung bewirkt wird. Auf diese Weise kann die während der Behandlungsdauer für die Trocknung der Substanzmenge aufgewandte Mikrowellenstrahlungsenergie angepasst werden, ohne die Strahlungsleistung der Einrichtung zur Erzeugung von Mikrowellenstrahlung zu verändern.

Es ist ebenfalls möglich und beispielsweise im Hinblick auf eine konstante Fördergeschwindigkeit der zu trocknenden Substanzmenge durch den Behandlungsraum zweckmäßig, dass eine Mikrowellenstrahlungsleistung so vorgegeben wird, dass während einer Behandlungsdauer eine vorgegebene Mikrowellenstrahlungsenergie in die Substanzmenge eindringt. Zu diesem Zweck ist die Einrichtung zur Erzeugung von Mikrowellenstrahlung so ausgestaltet, dass die von dieser Einrichtung emittierte Strahlungsleistung von einer Steuerungseinrichtung verändert und so angepasst werden kann, dass nur diejenige Energie für die Erzeugung der Mikrowellenstrahlung aufgewendet wird, die für den Trocknungsprozess erforderlich ist.

Um den Trocknungsprozess zu beschleunigen ist vorgesehen, dass mindestens ein Anteil des nicht zur Trocknung der Substanzmenge umgewandelten Anteils der Mikrowellenstrahlungsenergie zur Erwärmung einer in den Behandlungsraum einströmenden Zuluft verwendet wird. Mit Hilfe einer Luftströmung, die durch den Behandlungsraum geführt wird, kann die während des Trocknungsprozesses aus der Substanzmenge austretende Feuchtigkeit von der Luftströmung aufgenommen und aus dem Behandlungsraum abgeführt werden. Um die Aufnahmefähigkeit der Luftströmung für Feuchtigkeit zu erhöhen ist es vorteilhaft, die in den Behandlungsraum einströmende Zuluft zu erwärmen. Um den Trocknungsprozess möglichst energieeffizient zu gestalten ist erfindungsgemäß vorgesehen, dass ein Anteil der nicht zur Trocknung der Substanzmenge verwendeten Mikrowellenstrahlungsenergie zur Erwärmung dieser Zuluft verwendet wird.

Die Erfindung betrifft auch eine Vorrichtung zur Durchführung des vorausgehend beschriebenen Verfahrens zum Trocknen von feuchten Substanzmengen durch Mikrowellen. Die Vorrichtung weist erfindungsgemäß einen Behandlungsraum und ein Förderband auf, mit welchem die zu trocknende Substanzmenge durch den Behandlungsraum hindurchgefördert werden kann. Die zu trocknende Substanzmenge kann mit einer Aufgabestation auf das Förderband aufgegeben und mit einer Entnahmestation von dem Förderband wieder entnommen werden. Die Vorrichtung zur Trocknung der feuchten Substanzmenge weist mindestens eine Vorrichtung zur Erzeugung einer Mikrowellenstrahlung auf, die in dem Behandlungsraum in die zu trocknende Substanzmenge eindringt. Mit einer Messeinrichtung in einem für Mikrowellen durchlässig an den Behandlungsraum angebundenen Messraum wird während einer Messdauer eine Kenngröße für einen nicht zur Trocknung der Substanzmenge umgewandelten Anteil der Mikrowellenstrahlungsenergie ermittelt, und während einer nachfolgenden Behandlungsperiode wird in Abhängigkeit von der ermittelten Kenngröße die Mikrowellenstrahlungsenergie des von der mindestens einer Vorrichtung zur Erzeugung eines Mikrowellenstrahlung erzeugten und in die Substanzmenge eindringenden Mikrowellenfeldes vorgegeben.

Einer bevorzugten Ausgestaltung des Erfindungsgedankens zufolge ist vorgesehen, dass die Mikrowellenerzeugungsvorrichtung mikrowellenübertragend mit einem Trocknungshohlleiter verbunden ist, der in den Behandlungsraum ragt und mindestens eine in den Behandlungsraum mündende Austrittsöffnung aufweist, und dass über eine Abzweigung ein Messhohlleiter mit dem Trocknungshohlleiter verbunden ist, über welchen Mikrowellen aus dem Trocknungshohlleiter dem Messraum zugeführt werden können. Der Messraum kann beabstandet von dem Behandlungsraum angeordnet und gegebenenfalls gesondert abgeschirmt sein, um eine unerwünschte Beeinflussung der dem Messraum zugeführten Mikrowellenstrahlungsleistung zu vermeiden. Der Trocknungshohlleiter kann eine oder mehrere Austrittsöffnungen aufweisen. Es ist ebenfalls möglich, mehrere Mikrowellenerzeugungsvorrichtungen an einen einzelnen Trocknungshohlleiter anzukoppeln, um die über den Trocknungshohlleiter dem Behandlungsraum zugeführte Mikrowellenstrahlungsleistung zu vergrößern. Auch eine Anordnung mehrerer Mikrowellenerzeugungsvorrichtungen, die jeweils über einen gesonderten Trocknungshohlleiter die Mikrowellenstrahlungsleistung dem Behandlungsraum zuführen können ist denkbar.

Gemäß einer vorteilhaften Ausgestaltung des Erfindungsgedankens ist vorgeshen, dass die Abzweigung einen Richtkoppler aufweist, so dass das von der Mikrowellenerzeugungsvorrichtung erzeugte Mikrowellenstrahlungsfeld zunächst an dem Messhohlleiter vorbeiwandert und lediglich ein nicht zur Trocknung der Substanzmenge ungewandelter Anteil der Mikrowellenstrahlungsenergie aus dem Trocknungshhohlleiter zurück und über den Messhohlleiter dem Messraum zugeführt wird. Geeignete Richtkoppler sind aus der Praxis bekannt.

Es ist ebenfalls möglich, durch eine Formgebung des Trocknungshohlleiters und des Messhohlleiters im Bereich der Abzweigung oder durch eine geeignete Anordnung des Mündungsbereichs des Messhohlleiters in den Trocknungshohlleiter den jeweiligen Anteil der von der Mikrowellenerzeugungsvorrichtung kommenden Mikrowellenstrahlungsleistung und von der aus dem Behandlungsraum zurück in den Messhohlleiter geführten Mikrowellenstrahlungsleistung zu beeinflussen.

Wird eine Vorrichtung 1 in einer beliebigen erfindungsgemäßen Konfiguration zur Trocknung einer Substanzmenge errichtet und beispielsweise in einem Klärwerk betrieben, um den dort anfallenden Klärschlamm zu trocken, ist es zweckmäßig, zunächst eine Kalibration der Vorrichtung durchzuführen und Referenzwerte für die dem Messraum 11 zugeführte Mikrowellenstrahlungsenergie in Abhängigkeit von dem Trocknungsgrad der Substanzmenge 6 zu erfassen. Dabei können auch Referenzwerte für verschiedene Substanzmengen 6 mit jeweils unterschiedlichen Bestandteilen oder Zusammensetzungen erfasst werden. Anhand der Referenzwerte kann anschließend während eines Betriebs der erfindungsgemäßen Vorrichtung der jeweilige Trocknungsgrad der dem Behandlungsraum zugeführten Substanzmenge 6 präziser ermittelt werden. Es hat sich gezeigt, dass die konstruktiven Rahmenbedingungen der jeweils errichteten erfindungsgemäßen Vorrichtung 1 einen erheblichen Einfluss auf die mit der Messvorrichtung 12 in dem Messraum 11 gemessenen Mikrowellenstrahlungsenergie aufweisen können, der gegebenenfalls auch den Einfluss der Zusammensetzung der zu trocknenden Substanzmenge 6 überwiegt.

Nachfolgend werden einige Ausführungsbeispiele des Erfindungsgedankens näher erläutert, die in der Zeichnung dargestellt sind. Es zeigt:
Figur 1 eine schematische Darstellung einer Vorrichtung zur Durchführung des vorangehend beschriebenen Verfahrens zur Trocknung einer feuchten Substanzmenge,
Figur 2 eine vergrößert dargestellte schematische Darstellung eines Messraums mit einer Messeinrichtung für eine Kenngröße für einen nicht zur Trocknung der Substanzmenge umgewandelten Anteil der Mikrostrahlungsenergie, und
Figur 3 eine schematische Darstellung einer abweichend zu Figur 1 ausgestalteten Vorrichtung, bei der eine Mikrowellenstrahlungsleistung über einen Trocknungshohlleiter dem Behandlungsraum zugeführt wird.

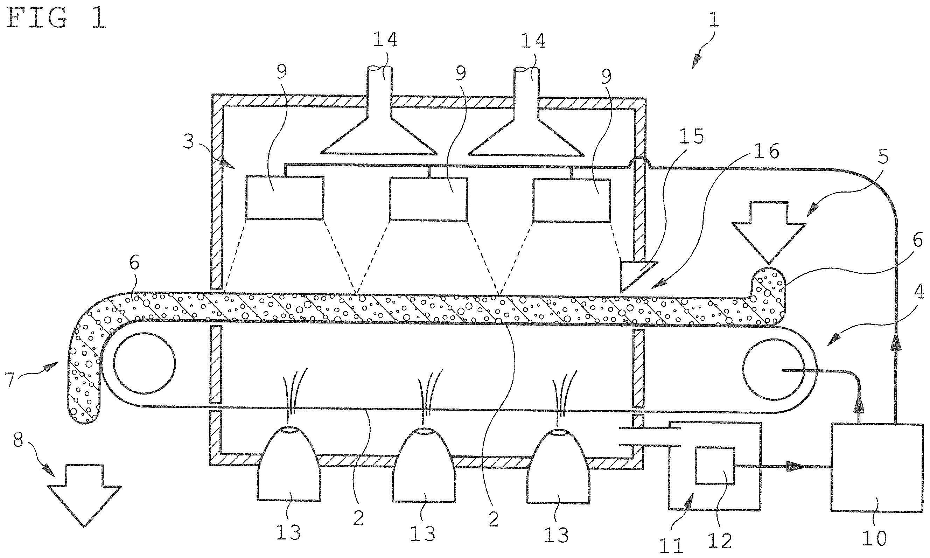

Eine in Figur 1 schematisch dargestellte Vorrichtung 1 zur Trocknung einer Feuchtigkeit enthaltenden Substanzmenge weist ein Förderband 2 auf, das durch einen im Wesentlichen geschlossenen Behandlungsraum 3 geführt ist. An dem Förderband 2 ist an einem ersten Ende 4 eine Aufgabestation 5 angeordnet, mit der mit einer vorgebbaren Rate eine feuchte Substanzmenge 6, beispielsweise ein zu trocknender Klärschlamm, auf das Förderband 2 aufgebracht wird. Die Substanzmenge 6 wird mit dem Förderband 2 durch den Behandlungsraum 3 gefördert und an einem zweiten Ende 7 des Förderbands 2 in einer Entnahmestation 8 von dem Förderband 2 wieder abgenommen, und kann anschließend einer Weiterbearbeitung zugeführt werden.

Oberhalb des Förderbands 2 sind mehrere Vorrichtungen zur Erzeugung von Mikrowellenstrahlung 9 angeordnet, mit denen eine Mikrowellenstrahlung erzeugt und zu der Substanzmenge 6 auf dem Förderband 2 hin abgestrahlt werden kann. Mit einer Steuerungseinrichtung 10 kann die von den einzelnen Vorrichtungen zur Erzeugung der Mikrowellenstrahlung 9 erzeugte und abgegebene Mikrowellenstrahlungsleistung und damit einhergehend auch deren Energieaufnahme und Energieverbrauch für jede einzelne Vorrichtung zur Erzeugung der Mikrowellenstrahlung 9 individuell vorgegeben werden. Eine Anzahl und Ausrichtung der Vorrichtungen zur Erzeugung der Mikrowellenstrahlung 9 kann beispielsweise in Abhängigkeit von einer Länge des Förderbands 2 oder der jeweils erzeugten Mikrowellenstrahlungsleistung, bzw. des zur Trocknung der Substanzmenge 6 verwendeten Mikrowellenfeldes vorgegeben werden.

Es ist ebenfalls möglich und insbesondere bei Vorrichtungen 1 mit einem geringen Durchsatz an zu trocknender Substanzmenge 6 oftmals vorteilhaft, dass an Stelle von mehreren Vorrichtungen zur Erzeugung von Mikrowellenstrahlung 9 nur eine einzige Vorrichtung 9 oder ein geringe Anzahl von Vorrichtungen 9 eingesetzt werden, jedoch jede dieser Vorrichtungen 9 mehrere Austrittsöffnungen für Mikrowellenstrahlung aufweist, um die zum Förderband 2 hin abgestrahlte Mikrowellenstrahlungsleistung möglichst gleichmäßig über das Förderband 2 zu verteilen.

Ein Messraum 11 ist an den Behandlungsraum 3 angeschlossen und in geeigneter Weise angeordnet und für Mikrowellenfelder durchlässig angekoppelt, sodass ein Anteil der Mikrowellenstrahlungsenergie, der nicht zur Trocknung der Substanzmenge 6 verwendet und zur Erwärmung und Verdampfung der in der Substanzmenge 6 enthaltenen Feuchtigkeit umgewandelt wird, in den Messraum 11 geführt wird. In dem Messraum 11 befindet sich eine Messeinrichtung 12 zur Erfassung einer Kenngröße für den nicht zur Trocknung der Substanzmenge 6 umgewandelten Anteil der Mikrowellenstrahlungsenergie. Die Messeinrichtung 12 weist eine Sensoreinrichtung auf, mit deren Hilfe die von der Messeinrichtung 12 erfasste Kenngröße in elektrische Signale umgewandelt und an die Steuerungseinrichtung 10 übermittelt wird. Der Messraum 11 dient dabei auch einem Schutz der Messeinrichtung 12 vor mechanischer Beanspruchung und gegebenenfalls rauen Umgebungsbedingungen, wie sie bei industriell genutzten Trocknungsanlagen beispielsweise für Klärschlämme oder dergleichen üblicherweise auftreten können.

In Abhängigkeit von der mit der Messeinrichtung 12 erfassten Kenngröße für den Anteil der Mikrowellenstrahlungsenergie, der nicht für die Trocknung der Substanzmenge 6 verwendet und umgewandelt wird, kann mit der Steuerungseinrichtung 10 die mit den Vorrichtungen zur Erzeugung der Mikrowellenstrahlungsenergie 9 erzeugte Mikrowellenstrahlungsleistung vorgegeben werden, um einen unnötigen Energieverbrauch zu vermeiden und den Trocknungsprozess möglichst energieeffizient durchführen zu können. Es ist ebenfalls möglich, mit der Steuerungseinrichtung 10 eine Fördergeschwindigkeit des Förderbands 2 zu verändern und so anzupassen, dass die Substanzmenge 6 möglichst rasch durch den Behandlungsraum 3 gefördert wird, jedoch während einer Behandlungsdauer in dem Behandlungsraum 3 ausreichend getrocknet wird. Dabei kann ein gewünschter Trocknungsgrad vorgegeben werden.

Es ist erfindungsgemäß möglich und für eine besonders energieeffiziente Durchführung des Verfahrens vorteilhaft, dass für Referenzsubstanzmengen mit bekannter Zusammensetzung und mit bekanntem Feuchtigkeitsgehalt das Trocknungsverfahren durchgeführt und für verschiedene Mikrowellenstrahlungsleistungen und Fördergeschwindigkeiten Referenzmessungen der Kenngröße und des sich ergebenden Trocknungsgrads vorgenommen werden, um ein Kennfeld für Betriebsparameter zu erzeugen, auf welches während der Durchführung des Verfahrens zur Trocknung von Substanzmengen 6 zurückgegriffen werden kann, um eine möglichst energieeffiziente Steuerung durch die Steuerungseinrichtung 10 zu ermöglichen.

Um den Trocknungsvorgang zu beschleunigen ist vorgesehen, dass über Düsen 13 erwärmte und trockene Luft in den Behandlungsraum 3 eingeblasen wird und über geeignet angeordnete Absaugeinrichtungen 14 feuchte Luft, die Feuchtigkeit von der zu trocknenden Substanzmenge 6 aufgenommen hat, aus dem Behandlungsraum 3 abgesaugt und abgeführt wird.

Das Förderband 2 kann eine geschlossene Oberfläche aufweisen. Es ist ebenfalls möglich, dass das Förderband 2 ein gelochtes Band oder ein mit zahlreichen Öffnungen versehenes Gliederkettenband aufweist, auf dem die Substanzmenge 6 durch den Behandlungsraum 3 gefördert werden kann. Durch Öffnungen in dem Förderband 2 kann eine für die Entfeuchtung der Substanzmenge 6 vorteilhafte Luftzirkulation an einer Oberfläche der Substanzmenge 6 und auch durch die Substanzmenge 6 unterstützt werden. Das Förderband 2 kann auch als Vibrationsfördermaschine ausgestaltet sein.

Bei einer einseitigen Anordnung der Vorrichtungen zur Erzeugung von Mikrowellenstrahlung 9 oberhalb des Förderbands 2 kann das Förderband 2 beispielsweise aus Edelstahlelementen zusammengesetzt sein. Falls zur Erhöhung und Konzentration der Mikrowellenstrahlungsleistung, die auf die Substanzmenge 6 einwirken soll, die Vorrichtungen zur Erzeugung von Mikrowellenstrahlung 9 auf beiden Seiten des Förderbands 2 angeordnet werden, ist das Förderband 2 zweckmäßigerweise aus einem für Mikrowellen durchlässigen Material oder zumindest mit einer großen Anzahl von Öffnungen ausgestaltet.

Mit der Steuerungseinrichtung 10 können wahlweise die mit den Vorrichtungen zur Erzeugung der Mikrowellenstrahlung 9 erzeugte Mikrowellenstrahlungsleistung und die Fördergeschwindigkeit des Förderbandes 2 so vorgegeben werden, dass für beliebige zu trocknende Substanzmengen 6 ein jeweils im Einzelfall vorgegebener Trocknungsgrad erreicht wird. Beispielsweise können bei Klärschlämmen unterschiedliche Trocknungsgrade vorgegeben werden, um den zu trocknenden Klärschlamm an die jeweils vorgesehene Weiterbearbeitung anzupassen.

Mit einer derartigen Vorrichtung 1 können unterschiedliche Trocknungsleistungen realisiert werden und beispielsweise Trocknungsraten von weniger als 200 Kilogramm Klärschlamm pro Tag bis zu mehr als 10 Tonnen Klärschlamm pro Tag ermöglicht werden. Die Vorrichtungen 1 können wahlweise vollautomatisch oder halbautomatisch betrieben werden. Es hat sich gezeigt, dass für viele Klärschlämme eine Behandlungsdauer von mindestens 60 Minuten und eine Erwärmung auf über 70 Grad Celsius vorteilhaft sind, um eine thermische Stabilisierung des Klärschlamms zu erreichen. Durch eine längere oder intensivere Bestrahlung mit Mikrowellen kann eine vollständige Zerstörung organischer Schadstoffe erreicht werden. Zusätzlich kann auch eine insbesondere bei Klärschlämmen vorteilhafte thermische Rückgewinnung von Phosphor oder anderen Stoffen und Elementen oder Komponenten erreicht werden, die in der zu trocknenden Substanzmenge 6 enthalten sind.

Für die Rückgewinnung einiger Stoffe ist es erforderlich, die thermische Rückgewinnung unter Abschluss von Sauerstoff durchzuführen. In diesem Fall wird ein den Behandlungsraum 3 umgebendes Gehäuse 15 so ausgestaltet und mit eng begrenzten Ein- und Ausförderöffnungen für das mit der Substanzmenge 6 beladene Förderband 2 versehen. Mit den Düsen 13 oder mit zusätzlich vorgesehenen Düsen kann ein sauerstoffverdrängendes Reaktionsgas in den Behandlungsraum 3 eingeblasen werden, um eine sauerstoffarme oder möglichst sauerstofffreie thermische Rückgewinnung zu ermöglichen. Aus dem ansonsten geschlossenen Gehäuse 15 tritt dabei durch die eng begrenzten Ein- und Ausförderöffnungen nur eine geringe Menge des Reaktionsgases aus, so dass während des Betriebs dementsprechend auch lediglich eine geringe Menge kontinuierlich oder intermittierend in den Behandlungsraum 3 eingebracht werden muss.

Eine maximale Dicke eines auf das Förderband 2 aufgetragenen Strangs der Substanzmenge 6 kann in Abhängigkeit von den verwendeten Vorrichtungen zu Erzeugung von Mikrowellenstrahlung 9 und einer auch davon abhängenden Eindringtiefe der Mikrowellenstrahlung in die Substanzmenge 6 durch eine Abstreifleiste 16 vorgegeben werden. Die Abstreifleiste 16 ist an einer dem ersten Ende 4 des Förderbands 2 zugewandten Seite des Behandlungsraums 3 angeordnet und begrenzt eine für die Durchförderung der Substanzmenge 6 auf dem Förderband 2 vorgesehene Öffnung 17 zu dem ansonsten weitestgehend geschlossenen Behandlungsraum 3. Die Abstreifleiste 16 ist höhenvariabel angeordnet. Die jeweils vorgegebene Höhe, durch welche eine Schichtdicke des auf dem Förderband 2 durch den Behandlungsraum 3 hindurch geförderten Strangs der Substanzmenge 6 begrenzt wird, kann beispielsweise mit der Störungseinrichtung 10 automatisiert vorgegeben werden.

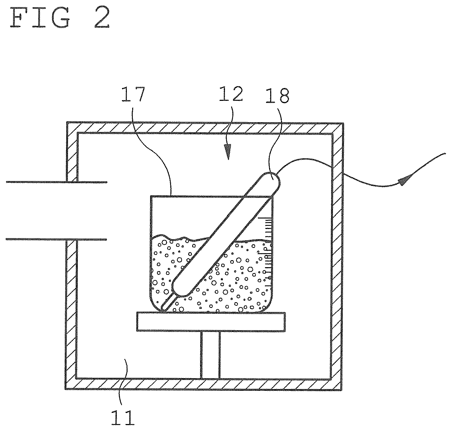

In Figur 2 ist exemplarisch eine vorteilhafte Ausgestaltung der Messeinrichtung 12 in dem Messraum 11 dargestellt. Die Messeinrichtung 12 weist einen mit Wasser gefüllten Behälter 18 auf. Durch die in den Messraum 11 eindringende Mikrowellenstrahlungsenergie wird das Wasser in dem Behälter 18 erwärmt. Eine Temperatur des Wassers wird mit einem Temperatursensor 19 erfasst und als Kenngröße für die in den Messraum 11 eindringende Mikrowellenstrahlungsenergie an die Steuerungseinrichtung 10 übermittelt.

Der Messraum 11 kann auch innerhalb des Behandlungsraums 3 angeordnet sein. Es sind auch andere Ausgestaltungen der Messeinrichtung 12 möglich, beispielsweise handelsübliche Mikrowellensensoren, mit denen eine Intensität eines Mikrowellenfeldes erfasst und in elektrische Messsignale umgewandelt werden kann.

Das den Behandlungsraum 3 umgebende Gehäuse 15 ist zweckmäßigerweise so ausgestaltet und gegebenenfalls mit einer geeigneten Ummantelung oder Verkleidung versehen, dass nur ein möglichst geringer Anteil der Mikrowellenstrahlung austreten kann, ohne für die Trocknung der zu trocknenden Substanzmenge 6 verwendet werden zu können, so dass unerwünschte Strahlungsverluste möglichst gering sind.

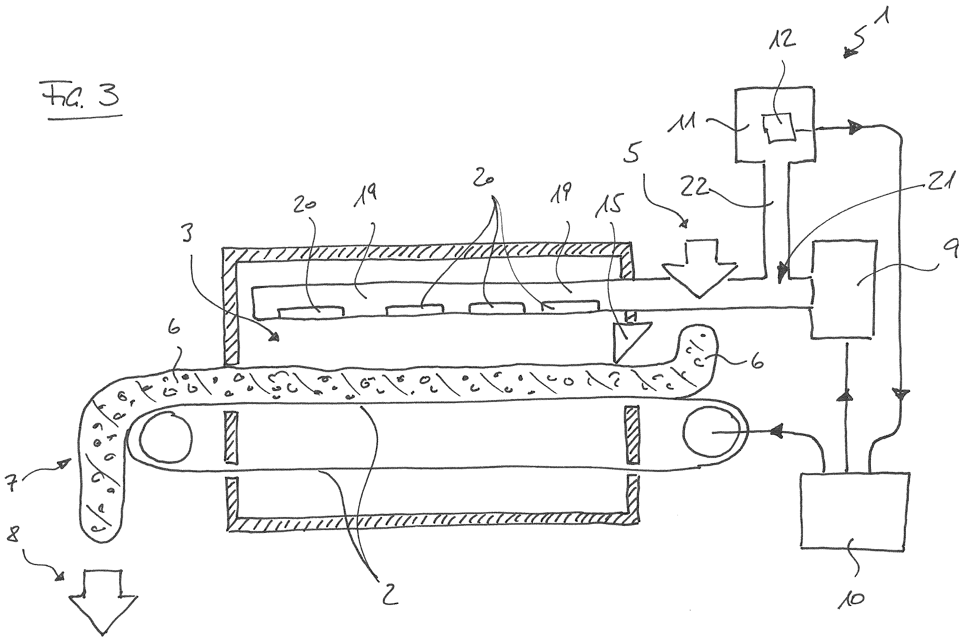

Bei der in Figur 3 schematisch dargestellten Ausgestaltung der Vorrichtung 1 werden die Mikrowellen in einer außerhalb des Behandlungsraums 3 angeordneten Mikrowellenerzeugungsvorrichtung 9 erzeugt und über einen daran angekoppelten Trocknungshohlleiter 19 dem Behandlungsraum 3 zugeführt. Der Trocknungshohlleiter 19 weist innerhalb des Behandlungsraums 3 mehrere Austrittsöffnungen 20 auf, aus denen die Mikrowellenstrahlungsleistung ausgekoppelt und in den Behandlungsraum abgestrahlt, bzw. der Substanzmenge 6 zugeführt wird. Von dem nicht zur Trocknung der Substanzmenge 6 verwendeten Anteil der Mikrowellenstrahlungsleistung wird wiederum ein Anteil in dem Trocknungshohlleiter 19 in Richtung der Mikrowellenerzeugungsvorrichtung 9 zurückgeführt. Zwischen der Mikrowellenerzeugungsvorrichtung 9 und einer ersten Austrittsöffnung 18 in dem Behandlungsraum 3 ist eine Abzweigung 21 angeordnet, in welcher ein Messhohlleiter 22 von dem Trocknungshohlleiter 19 abzweigt. Der Messhohlleiter 22 führt zu dem ebenfalls außerhalb des Behandlungsraums 3 angeordneten Messraum 11. Die Abzweigung 21 weist vorzugsweise einen Richtkoppler auf, so dass das von der Mikrowellenerzeugungsvorrichtung 9 erzeugte Mikrowellenstrahlungsfeld zunächst an dem Messhohlleiter 22 vorbeiwandert und lediglich ein Anteil des nicht zur Trocknung der Substanzmenge 6 ungewandelten Anteils der Mikrowellenstrahlungsenergie aus dem Trocknungshohlleiter 19 zurück und über den Messhohlleiter 22 dem Messraum 11 zugeführt wird. In dem Messraum 11 kann die dem Messraum 11 zugeführte Mikrowellenstrahlungsenergie mit einer geeigneten Messvorrichtung 12 gemessen werden.

## Patentansprüche

1. Verfahren zum Trocken von feuchten Substanzmengen (6) durch Mikrowellen, wobei die zu trocknende Substanzmenge (6) durch einen Behandlungsraum (3) gefördert wird, in welchem ein in die Substanzmenge (6) eindringendes Mikrowellenfeld mit einer vorgebbaren Mikrowellenstrahlungsleistung erzeugt wird, **dadurch gekennzeichnet, dass** während einer Messdauer eine Kenngröße für einen nicht zur Trocknung der Substanzmenge (6) umgewandelten Anteil der Mikrowellenstrahlungsenergie ermittelt und während einer nachfolgenden Behandlungsperiode in Abhängigkeit von der ermittelten Kenngröße die Mikrowellenstrahlungsenergie des in die Substanzmenge (6) eindringenden Mikrowellenfeldes vorgegeben wird.

2. Verfahren nach Anspruch 1, **dadurch gekennzeichnet, dass** der nicht zur Trocknung der Substanzmenge (6) umgewandelte Anteil der Mikrowellenstrahlungsenergie mindestens teilweise einem Messraum (11) zugeführt wird und mit einer Messeinrichtung (12) die Kenngröße in dem Messraum (11) erfasst wird.

3. Verfahren nach Anspruch 2, **dadurch gekennzeichnet, dass** die Mikrowellenstrahlungsleistung über einen Trocknungshohlleiter () mit mindestens einer Austrittsöffnung () dem Behandlungsraum (3) zugeführt wird, wobei über eine Abzweigung (21) von dem Trocknungshohlleiter (19) in einen Messhohlleiter (22) ein nicht zur Trocknung der Substanzmenge (6) ungewandelter Anteil der Mikrowellenstrahlungsenergie dem Messraum (11) zugeführt wird.

4. Verfahren nach Anspruch 2, **dadurch gekennzeichnet, dass** die Abzweigung (21) von dem Trocknungshohlleiter (19) in den Messhohlleiter (22) durch einen Richtkoppler gebildet wird, so dass das von einer Mikrowellenerzeugungsvorrichtung (9) erzeugte Mikrowellenstrahlungsfeld zunächst an dem Messhohlleiter (22) vorbeiwandert und lediglich ein nicht zur Trocknung der Substanzmenge (6) ungewandelter Anteil der Mikrowellenstrahlungsenergie aus dem Trocknungshohlleiter (19) zurück und über den Messhohlleiter (22) dem Messraum (11) zugeführt wird.

5. Verfahren nach einem der Ansprüche 2 bis 4, **dadurch gekennzeichnet, dass** die Messeinrichtung (12) ein mikrowellenabsorbierendes Messprobenmaterial aufweist, dessen Erwärmung erfasst wird, die durch das dem Messraum (11) zugeführten Mikrowellenfeld bewirkt wird.

6. Verfahren nach einem der Ansprüche 2 bis 5, **dadurch gekennzeichnet, dass** die Messeinrichtung (11) eine Sensoreinrichtung aufweist.

7. Verfahren nach einem der vorausgehenden Ansprüche, **dadurch gekennzeichnet, dass** eine Fördergeschwindigkeit der zu trocknenden Substanzmenge (6) durch den Behandlungsraum (3) so vorgegeben wird, dass während einer Behandlungsdauer eine vorgegebene Mikrowellenstrahlungsenergie in die Substanzmenge (6) eindringt.

8. Verfahren nach einem der vorausgehenden Ansprüche, **dadurch gekennzeichnet, dass** eine Mikrowellenstrahlungsleistung so vorgegeben wird, dass während einer Behandlungsdauer eine vorgegebene Mikrowellenstrahlungsenergie in die Substanzmenge (6) eindringt.

9. Verfahren nach einem der vorausgehenden Ansprüche, **dadurch gekennzeichnet, dass** mindestens ein Anteil des nicht zur Trocknung der Substanzmenge (6) umgewandelten Anteils der Mikrowellenstrahlungsenergie zur Erwärmung einer in den Behandlungsraum (3) einströmenden Zuluft verwendet wird.

10. Vorrichtung (1) zur Durchführung des in einem der Ansprüche 1 bis 9 beschriebenen Verfahrens zum Trocknen von feuchten Substanzmengen (6) durch Mikrowellen mit einem Behandlungsraum (3) und mit einem Förderband (2), mit welchem die zu trocknende Substanzmenge (6) durch den Behandlungsraum (3) hindurchgefördert werden kann, wobei die zu trocknende Substanzmenge (6) mit einer Aufgabestation (5) auf das Förderband (2) aufgegeben und mit einer Entnahmestation (8) von dem Förderband (2) wieder entnommen werden kann, und mit mindestens einer Vorrichtung zur Erzeugung einer Mikrowellenstrahlung (9), die in dem Behandlungsraum (3) in die zu trocknende Substanzmenge (6) eindringt, wobei mit einer Messeinrichtung (12) in einem für Mikrowellen durchlässig an den Behandlungsraum (3) angebundenen Messraum (11) während einer Messdauer eine Kenngröße für einen nicht zur Trocknung der Substanzmenge umgewandelten Anteil der Mikrowellenstrahlungsenergie ermittelt wird, und während einer nachfolgenden Behandlungsperiode in Abhängigkeit von der ermittelten Kenngröße die Mikrowellenstrahlungsenergie des von der mindestens einer Vorrichtung zur Erzeugung eines Mikrowellenstrahlung (9) erzeugten und in die Substanzmenge (6) eindringenden Mikrowellenfeldes vorgegeben wird.

11. Vorrichtung (1) nach Anspruch 10, **dadurch gekennzeichnet, dass** die Mikrowellenerzeugungsvorrichtung (9) mikrowellenübertragend mit einem Trocknungshohlleiter (19) verbunden ist, der in den Behandlungsraum (3) ragt und mindestens eine in den Behandlungsraum (3) mündende Austrittsöffnung (20) aufweist, und dass über eine Abzweigung (21) ein Messhohlleiter (22) mit dem Trocknungshohlleiter (19) verbunden ist, über welchen Mikrowellen aus dem Trocknungshohlleiter (19) dem Messraum (11) zugeführt werden können.

12. Vorrichtung (1) nach Anspruch 11, **dadurch gekennzeichnet, dass** die Abzweigung (21) einen Richtkoppler aufweist, so dass das von der Mikrowellenerzeugungsvorrichtung (9) erzeugte Mikrowellenstrahlungsfeld zunächst an dem Messhohlleiter (22) vorbeiwandert und lediglich ein nicht zur Trocknung der Substanzmenge (6) ungewandelter Anteil der Mikrowellenstrahlungsenergie aus dem Trocknungshhohlleiter (19) zurück und über den Messhohlleiter (22) dem Messraum (11) zugeführt wird.
